# EUROPEAN PATENT APPLICATION

(11) **EP 4 491 834 A1**
(43) Date of publication of application: **15.01.2025**
(21) Application number: 23306185.2
(22) Date of filing: 11.07.2023
(51) Int. Cl.: E04H 12/08, E04H 12/16, F03D 13/20

(54) **ELONGATED STRUCTURE COMPRISING A TENSIONING TENDON, WIND TURBINE STRUCTURE AND PRESTRESSING METHOD**

(71) Applicant: TOTALENERGIES ONETECH, 92400 Courbevoie (FR)
(72) Inventor: AUBERT, Jean-Michel, 92400 Courbevoie (FR); LEMA SARMENTO, Bruno Rodrigo, 92400 Courbevoie (FR); CAPALDO, Mattéo, 92400 Courbevoie (FR); LEPLINGARD, Adrien, 92400 Courbevoie (FR)
(74) Representative: Plasseraud IP

(57) **Abstract**

An elongated structure (1), being subject to at least one excitation frequency, comprising:
- a hollow steel tower (2),
- one or more tensioning tendon (6),
the tensioning tendon (6) being tensioned between an upper region and a lower region on the hollow steel tower (2), the tensioning tendon (6) being dimensioned to induce a determined compressive load on the hollow steel tower (2) in order to shift a natural frequency of the elongated structure away from at least one of the excitation frequencies.

## Description

### Technical Field

The present disclosure pertains to the field of tower structures, for example applied to wind turbines systems that are either located on land or offshore, and particularly to the mechanical resistance of such structures.

### Background Art

It is known that wind turbines generally comprise a mast, a nacelle comprising a generator, a plurality of rotating blades and a support that is either fixed to the ground or in some cases attached to a floating system that provides buoyancy, for example for floating offshore turbines.

The wind turbine is subject to a plurality of external or internal solicitations. Typically, any system suffers from environmental loads such as the action of the wind on the blades which, due to drag force, tends to apply a considerable bending load on the mast. Furthermore, any wind turbine system is exposed to a periodical solicitation due to an aerodynamic response induced by the passing of the blades in front of the mast, and to the rotation of the rotor to which the blades are fixed. In addition, offshore systems in particular are also subject to the action of the waves and/or current in the water. Furthermore, there can be an oscillating solicitation due to the effect of gravity on the rotating blades.

Each of these different mechanical excitations operate at a particular separate frequency, the highest and lowest defining an excitations frequency range within which a resonance phenomenon is likely to occur. In order to avoid early breakage of the structure due to fatigue, it is a well-known fact that the natural frequency (or eigen frequency) of the wind turbine structural system must be outside of that range.

The primary solution known to the skilled person to affect the eigen frequency of the system is to modify the global stiffness of the mast, which is achieved by redefining the dimensions of the mast, typically the diameter of the section of the mast and/or its thickness.

Nowadays, increasing market demand and technical progress allow for bigger and bigger installations up to such a point that it is becoming more and more difficult to work with the mast dimensions to solve the natural frequency problem.

Furthermore, any dimensional solution of this type requires to be implemented at the design step before the operation phase of the turbine and thus cannot be applied to existing turbines.

The present disclosure aims at solving the frequency issue in such a way that may be adapted to bigger wind turbines and/or to existing turbines.

### Summary

The present disclosure relates to an elongated structure, being subject to at least one excitation frequency, comprising:
- a hollow steel tower,
- one or more tensioning tendon,
the tensioning tendon being tensioned between an upper region and a lower region on the hollow steel tower, the tensioning tendon being dimensioned to induce a determined compressive load on the hollow steel tower in order to shift a natural frequency of the elongated structure away from at least one of the excitation frequencies.

The use of a prestressed material is generally found in the construction sector for reinforced concrete structures, which is a material that has no tolerance for elongation, for example due to pure tension loads or tension loads induced by a bending deformation. In the case of a tower structure, the prestress is essentially applied to prevent bending of the structure and therefore prevent the elongation induced on its sides, which could result in early breakage of the concrete.

The prestress is here applied to a steel tower, for example to the steel mast of a wind turbine, for which there is no need to completely prevent bending, and only to shift its natural frequency away from the at least one excitation frequencies.

As a synergistic additional effect, the prestress according to the present disclosure also helps limiting tension loads that usually tend to crack welding points on the steel tower.

The solution therefore allows to prevent early breakage of the tower without over-sizing the tower structure.

Furthermore, this solution can be applied to existing turbines provided they comprise a hollow steel tower, and the tensioning intensity can be adapted to their specific natural frequency.

In another aspect, one or more tensioning tendon is located in a geometrical axis region of the hollow steel tower corresponding to the neutral fiber of the hollow steel tower. This particular configuration allows maximum life span to the tensioning tendon because the geometrical center corresponds to the neutral fiber of the mast which is not (or barely) solicited by the loads. Furthermore, this design is a simple alternative that does not require many fixation points and additionally makes it possible to use only one cable, in a particular embodiment.

In another aspect, the hollow steel tower is fixed on a support base, the tensioning tendon is fixed to an additional top structure in an upper region of the hollow steel tower and to an additional bottom structure in the support base, both the additional top structure and the additional bottom structure being configured to transfer the determined compressive load to the hollow steel tower through a plurality of fixing points. This particular embodiment facilitates the implementation of the solution on existing tower structures by using additional intermediate structure parts that can be used as interfaces between the tensioning tendon and any existing tower structure. Both the additional bottom and top structure can be adapted to the specific case of application: relatively to the specific loads involved and/or to the specific shape of the tower.

In embodiments, the material of the tensioning tendon is a high modulus polyethylene or steel.

In embodiments, the tensioning tendon is a braid rope or a wire cable or a tubular or a bar.

These are highly efficient materials and cable configurations for this case of use, in both aspects of performance and cost.

According to another object, a wind turbine structure is disclosed, the wind turbine structure comprising:
- An elongated structure as described above, wherein the hollow steel tower is a mast of the wind turbine;
- a nacelle on an upper end of the mast;
- a plurality of rotating blades mounted on the nacelle;
The at least one excitation frequencies comprising at least one of: the action of the wind on the rotating blades, the rotation of the rotating blade, the action of the water, the action of gravity on the elongated structure and/or on the plurality of rotating blades.

The solution according to the present disclosure finds a particular useful application in the field of wind turbines, wherein the mast is highly solicited and the need to shift the natural frequency may be crucial.

According to another object, a method for prestressing a wind turbine structure being subject to at least one excitation frequencies is disclosed, the wind turbine structure comprising:
- an elongated structure comprising a hollow steel tower and one or more tensioning tendon being dimensioned to induce a determined compressive load on the hollow steel tower,
- a support base on which the hollow steel tower is fixed,
- a nacelle on an upper end of the hollow steel tower;
- a plurality of rotating blades mounted on the nacelle;
the method comprising the following steps:
- fixing an additional top structure on an upper region of the hollow steel tower,
- fixing an additional bottom structure to the support base, one of the additional bottom structure or the additional top structure comprising a tensioning system,
- fixing a first end of the tensioning cable to the other of the additional bottom structure or the additional top structure,
- Applying a tensioning force using tensioning means of the tensioning system to the tensioning tendon in order to force the tensioning tendon out of a resting state to reach an elongated state to apply a compressive load to the hollow steel tower and to shift the natural frequency of the hollow steel tower away from at least one of the excitation frequencies.
- Blocking the tensioning tendon from coming back to its resting state using blocking means, while the tensioning tendon is elongated, in order to maintain the tensioning tendon in its elongated state.

Such a method for prestressing a wind turbine structure allows the installation of the present solution to any existing turbine, provided they comprise a hollow steel tower structure to accommodate the tensioning tendon and the additional structures.

In embodiments, the tensioning means may comprise one or more actuators configured to apply the tensioning force to a tensioning plate fixed on the tensioning tendon in order to force the tensioning tendon to reach its elongated state.

In embodiments, the blocking means may comprise at least one shim configured to be positioned between a first stop surface on the one of the additional top structure or the additional bottom structure that comprises the tensioning system and a second stop surface on the tensioning tendon, while the tensioning tendon is elongated, in order to maintain the tensioning tendon in its elongated state.

### Brief Description of Drawings

Other features, details and advantages will be shown in the following detailed description and on the figures, on which:

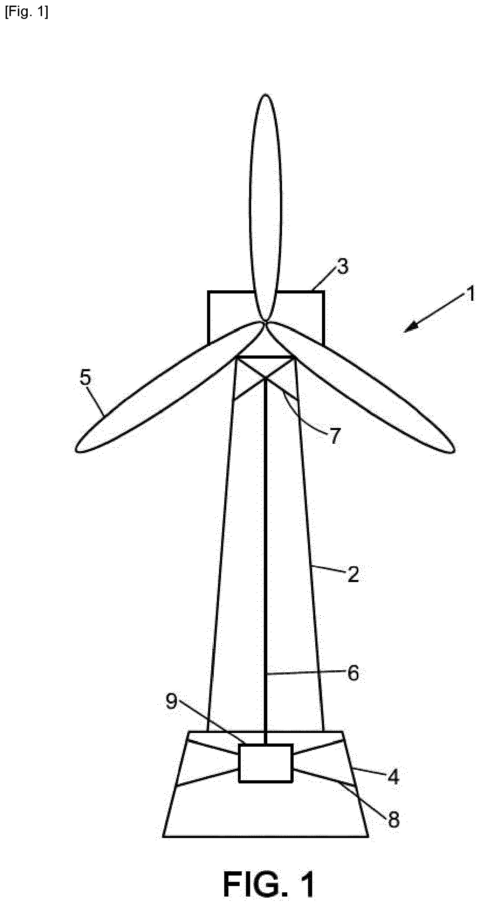

Fig. 1 is an example of a wind turbine structure,
Fig. 2 is a detailed view of an example of a tensioning system,
Fig. 3a is a graph showing how prestress can shift the evolution of eigen frequencies for side-to-side mode,
Fig. 3b shows the same correlation applied to fore-aft mode.
Fig. 4 shows a graph of the excitation frequencies applied to a wind turbine.

### Description of Embodiments

The present disclosure concerns an elongated structure 1, being subject to a plurality of excitation frequencies. Such elongated structure can be any building protruding in any direction from a base, which may be directly or indirectly mounted on the ground, floating on water, or anchored to water bottom, and comprising a free end. In particular, and as discussed in more details below, the elongated structure may be a mast of a wind turbine, which may be either onshore or offshore. Alternatively, the elongated structure may for example be a tower crane, or a power line pole.

The elongated structure 1 may comprise a hollow steel tower 2 and one or more tensioning tendon 6. According to an embodiment, the hollow steel tower 2 may have a circular cross section, or an oval cross section, or a polygonal cross section.

According to another embodiment, the hollow steel tower 2 can be a truss structure, for example comprising an assembly of a set of vertical, horizontal, and/or diagonal elongated elements forming several geometrical apertures.

The tensioning tendon 6 may be tensioned between an upper region and a lower region on the hollow steel tower 2, the tensioning tendon 6 being dimensioned to induce a determined compressive load on the hollow steel tower 2 in order to shift a natural frequency of the elongated structure 1 outside the range of the excitation frequencies.

The tensioning tendon 6 may be fabricated using a high modulus polyethylene, or steel. The tensioning tendon is a braid rope or a tubular or a combination of both configurations, in particular a braid or rope made of HMPE, one or more steel cables or a tube or a bar or a succession of steel tubes or bars. The tensioning tendon 6 should be dimensioned to resist at least the highest tensile load applied to it. There may be any number of tensioning tendons 6, combining any fabrication technique, tensioned between the upper and lower region of the hollow steel tower 2: for example, 1, 2, 3 or more tensioning tendons 6.

In a particular embodiment, the one or more tensioning tendon 6 may be located in a geometrical center region inside the hollow steel tower 2. In a particular embodiment, the geometrical center region corresponds to the neutral fiber of the hollow steel tower 2. The neutral fiber may be obtained, for example, by creating a thread-like representation passing through every center of gravity of each cross-section of the structure, such equivalent remaining a valid representation of the structure when conducting force calculation.

In the case of a plurality of tensioning tendons, they may be arranged as a group and evenly distributed in the geometrical center to provide a balanced arrangement. They may be in contact with each other or separated.

In a further embodiment, the hollow steel tower 2 may be fixed on a support base 4. The support base 4 has an intermediate part function between a base surface (such as the ground or a substructure, or water...) and the hollow steel tower 2. The hollow steel tower 2 may comprise an additional top structure 7 located in an upper region of the tower, and an additional bottom structure 8 in the support base 4. In this case, the tensioning tendon is fixed to both additional top and bottom structures 7, 8. Both the additional top structure 7 and the additional bottom structure 8 are configured to transfer the determined compressive load to the hollow steel tower 2 through a plurality of fixing points. For example, the fixing points may comprise bolts, and/or welded points. It is advantageous for the fixing points to be evenly distributed around the circumference of the hollow steel tower 2 for the sake of balance of the forces.

The present disclosure also concerns a wind turbine structure comprising an elongated structure 1 as described before that is subject to at least one excitation frequency, wherein the hollow steel tower is a mast of the wind turbine, the mast comprising one or more tensioning tendons 6. The wind turbine may also comprise a nacelle 3 which is fixed on an upper end of the mast, and a plurality of rotating blades 5 mounted on the nacelle 3, the rotating blades may be fixed on a rotor and be configured to generate electricity by cooperating with a generator located in the nacelle when driven by the wind or any other current of a fluid.

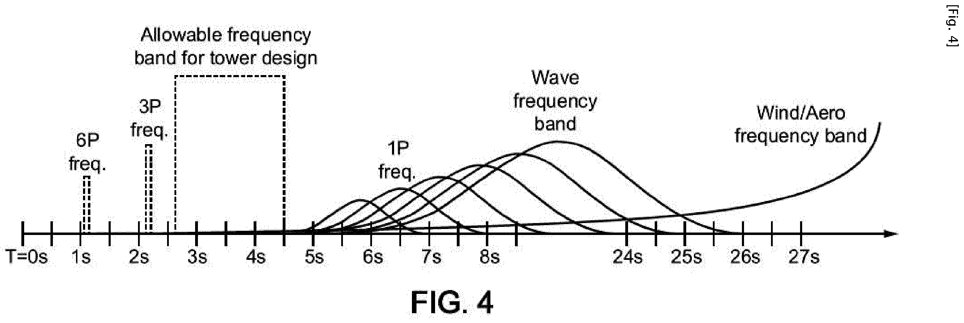

The main excitation frequencies applied to a wind turbine are represented on the figure 4. In this study case, they are applied to a 14MW and 120 meters high wind turbine and comprise: the action of the wind on the rotating blades 5 that may tend to bend the mast due to drag and lift force (referred to as "wind/aero frequency band"), and/or the periodical excitation due to an aerodynamic response induced by the passing of the blades in front of the mast at each rotation (commonly referred to as the "3p frequency", or "6p frequency" depending of the number of rotating blades), and/or the rotation of the rotor to which the blades are fixed (commonly known as the "1p frequency"), and/or the action of waves or water current in case of a turbine that is either floating on the water or fixed to the ground beneath the water (referred to as "water frequency band"). The excitation frequencies may also comprise the oscillating action of gravity on the rotating blades, which is not represented here.

Still in reference to the figure 4, the allowable frequency band for tower design is represented in dotted lines. This is the range of values that are acceptable for the eigen frequency of the turbine structure.

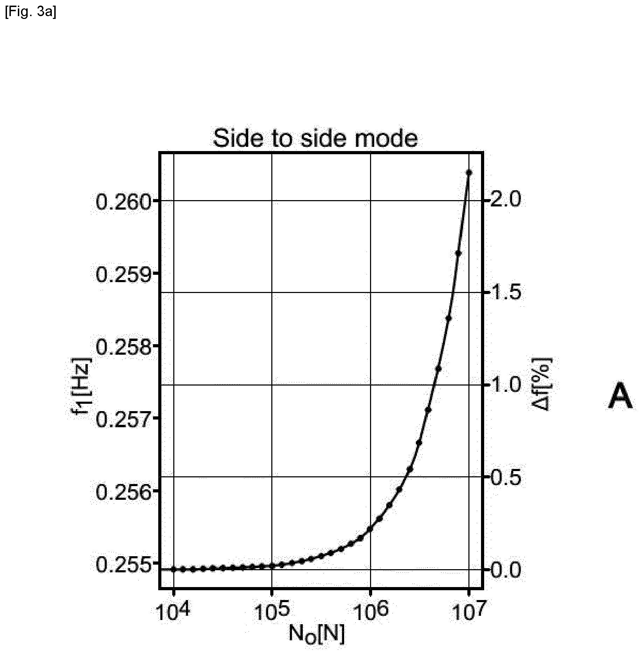

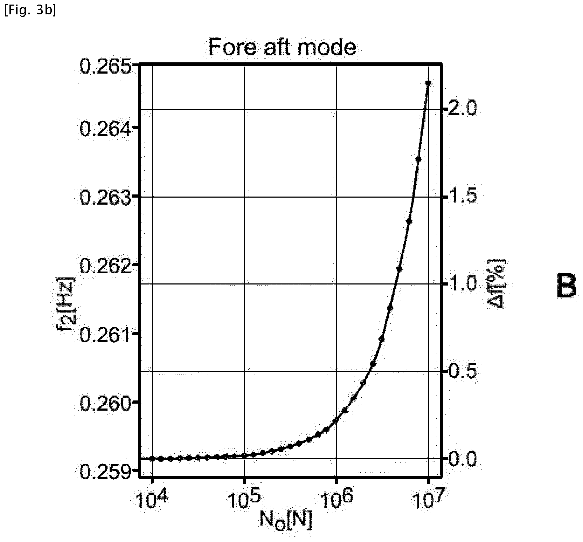

Tensioning the mast of the wind turbine by the one or more tensioning tendon 6 according to the present disclosure enables, as shown for instance in figures 3a and 3b, to shift the natural oscillation frequency (or eigen frequency) of the wind turbine and thus preventing the turbine from entering a resonating state due to the excitation frequencies to which it is submitted. The design of a wind turbine with a natural frequency that is sufficiently distant from the excitation frequencies is thus rendered easier.

For example, as shown in the figure 3, for both side to side and fore aft deformation modes, a compressive load of 10000kN (approximately 1000 tons), on the same type of wind turbine, induces a shift of the eigen frequency of about 2%.

In embodiments, a wind turbine may be built to readily incorporate said tensioning tendon 6. In other embodiments, said tensioning tendon may be added to a wind turbine that is already in operation and has not been originally designed to incorporate said tendon 6.

Accordingly, the present disclosure further concerns a method for prestressing a wind turbine structure, comprising the following:
- fixing an additional top structure 7 on an upper region of the hollow steel tower 2,
- fixing an additional bottom structure 8 to the support base 4, one of the additional bottom structure 8 or the additional top structure 7 comprising a tensioning system 9,
- fixing a first end of the tensioning cable 6 to the other of the additional bottom structure 8 or the additional top structure 7 that does not comprise said tensioning system 9,
- Applying a tensioning force using tensioning means of the tensioning system 9 to the tensioning tendon 6 in order to force the tensioning tendon 6 out of a resting state to reach an elongated state to apply a compressive load to the hollow steel tower 2 and to shift the natural frequency of the hollow steel tower 2 away from at least one of the excitation frequencies.
- Blocking the tensioning tendon from coming back to its resting state using blocking means, while the tensioning tendon 6 is elongated, in order to maintain the tensioning tendon 6 in its elongated state.

In a particular embodiment, the tensioning means may be one or more actuators 11 of the tensioning system 9 that may be used to apply a tensioning force to a tensioning plate 12 fixed on the tensioning tendon 6 in order to force the tensioning tendon 6 to reach its elongated state.

In another embodiment, a hoist or a winch may be used to elongate the tensioning tendon 6.

In a particular embodiment, blocking the tensioning tendon from coming back to its resting state may be done by using one of more shims 13, while the tensioning tendon 6 is elongated, between a first stop surface 14 on the one of the additional top structure 7 or the additional bottom structure 7 that comprises the tensioning system 9 and a second stop surface 15 on the tensioning tendon 6 in order to maintain the tensioning tendon 6 in its elongated state.

Such a method may be applied to an existing wind turbine that is already in place provided they comprise a hollow steel tower 2. In fact, for the reasons explained above the solution described herein is not intended to be applied to concrete towers. The tensioning cable 6 may then be dimensioned specially to endure the compressive load determined for the involved turbine, the number of tensioning tendons may also be adapted. The number of tensioning tendons 6 may for example be increased if the compressive load is considered high in comparison to the resistance of one tensioning tendon 6.

The one or more actuator 11 can be any kind of device generating a force to elongate the tensioning tendon 9. For example, a hydraulic cylinder. There can be any number of actuators 11, for example 1, 2, 3 or more. In a particular embodiment using only one actuator 11, the actuator should be placed in line with the tensioning tendon for the sake of balance. For the same reason, in a particular embodiment in which a plurality of actuators is used, the actuators should be evenly distributed around the tensioning plate 12 so that the equivalent force, in other words the sum of each force, may be in line with the tensioning tendon 9.

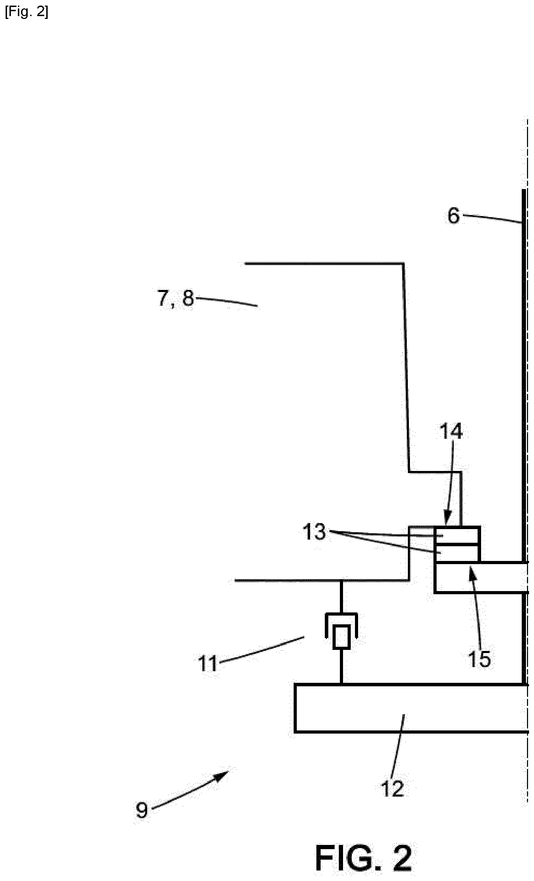

In a particular embodiment represented on figure 2, only one actuator is shown but a symmetry axis along the tensioning tendon is to consider. The full arrangement of this particular embodiment is therefore a replication of the parts represented on the left side of the axis to its right side. For example, the symmetry could be obtained by a revolution around the axis, for example with 3 actuators each separated by a rotation of 120° around said axis, or by a mirror image from one side to the other.

The tensioning system 9 may be part of the additional bottom or top structure 7, 8 or may be temporarily added and removed once the one or more shim 13 is put in place and the actuators 11 are released. It is understood that any of the additional bottom structure 8 or the additional top structure 7 may comprise the tensioning system 9. The tensioning tendon 9 may therefore be elongated from any of its two ends, provided the remaining end is fixed to the hollow steel tower 2 of the elongated structure 1 or to the mast of the turbine.

The one or more shim 13 may be assimilated to any blocking means that would prevent the elongated tensioning tendon to return to its non-elongated state. The tensioning plate 12 may be assimilated to any part that is able to transfer the actuator's force to the tensioning tendon 9. It can either be temporarily fixed to the tendon 6 or be a permanent part of the tendon 6.

### Industrial application

The embodiments described herein find application in any building or machine using elongated steel structures and being solicited by periodical force that would imply a risk of early breakage due to resonance. A particular field of application may be the wind turbine industry.

### Parts list

| | |
|---|---|
| - 1 | : Elongated structure |
| - 2 | : Hollow steel tower |
| - 3 | : Nacelle |
| - 4 | : Support base |
| - 5 | : Rotating blades |
| - 6 | : Tensioning tendon |
| - 7 | : Additional top structure |
| - 8 | : Additional bottom structure |
| - 9 | : Tensioning system |
| - 11 | : Actuator(s) |
| - 12 | : Tensioning plate |
| - 13 | : Shim(s) |
| - 14 | : First stop surface |
| - 15 | : Second stop surface |

## Claims

1. An elongated structure (1), being subject to at least one excitation frequency, comprising:
- a hollow steel tower (2),
- one or more tensioning tendon (6),
the tensioning tendon (6) being tensioned between an upper region and a lower region on the hollow steel tower (2), the tensioning tendon (6) being dimensioned to induce a determined compressive load on the hollow steel tower (2) in order to shift a natural frequency of the elongated structure away from at least one of the excitation frequencies.

2. The elongated structure according to claim 1 wherein the one or more tensioning tendon (6) is located in a geometrical center region of the hollow steel tower (2) corresponding to the neutral fiber of the hollow steel tower (2).

3. The elongated structure according to claim 1 or 2 wherein the hollow steel tower (2) is fixed on a support base (4), the tensioning tendon (6) being fixed to an additional top structure (7) in an upper region of the hollow steel tower (2) and to an additional bottom structure (8) in the support base (4), both the additional top structure (7) and the additional bottom structure (8) being configured to transfer the determined compressive load to the hollow steel tower (2) through a plurality of fixing points.

4. The elongated structure according to any of the preceding claim wherein the material of the tensioning tendon (6) is a high modulus polyethylene or steel.

5. The elongated structure according to any of the preceding claim wherein the tensioning tendon (6) is a braid rope or a wire cable or a tubular or a bar.

6. A wind turbine structure (1) comprising:
- An elongated structure according to any of the preceding claims wherein the hollow steel tower (2) is a mast of the wind turbine;
- a nacelle (3) on an upper end of the mast;
- a plurality of rotating blades (5) mounted on the nacelle (3);
The at least one excitation frequencies comprising at least one of: the action of the wind on the rotating blades (5), the rotation of the rotating blade (5), the action of the water, the action of gravity on the elongated structure and/or on the plurality of rotating blades (5).

7. Method for prestressing a wind turbine structure being subject to at least one excitation frequencies, the wind turbine structure comprising:
- an elongated structure (1) comprising a hollow steel tower (2) and one or more tensioning tendon (6) being dimensioned to induce a determined compressive load on the hollow steel tower (2),
- a support base (4) on which the hollow steel tower (2) is fixed,
- a nacelle (3) on an upper end of the hollow steel tower (2);
- a plurality of rotating blades (5) mounted on the nacelle (3);
the method comprising the following steps:
- fixing an additional top structure (7) on an upper region of the hollow steel tower (2),
- fixing an additional bottom structure (8) to the support base (4), one of the additional bottom structure (8) or the additional top structure (7) comprising a tensioning system (9),
- fixing a first end of the tensioning cable (6) to the other of the additional bottom structure (8) or the additional top structure (7),
- Applying a tensioning force using tensioning means of the tensioning system (9) to the tensioning tendon (6) in order to force the tensioning tendon (6) out of a resting state to reach an elongated state to apply a compressive load to the hollow steel tower (2) and to shift the natural frequency of the hollow steel tower (2) away from at least one of the excitation frequencies.
- Blocking the tensioning tendon (6) from coming back to its resting state using blocking means, while the tensioning tendon (6) is elongated, in order to maintain the tensioning tendon (6) in an elongated state.

8. Method according to the preceding claim, the tensioning means comprising one or more actuators (11) configured to apply the tensioning force to a tensioning plate (12) fixed on the tensioning tendon (6) in order to force the tensioning tendon (6) to reach its elongated state.

9. Method according to the claims 7 or 8, the blocking means comprising at least one shim (13) configured to be positioned between a first stop surface (14) on the one of the additional top structure (7) or the additional bottom structure (7) that comprises the tensioning system (9) and a second stop surface (15) on the tensioning tendon (6), while the tensioning tendon (6) is elongated, in order to maintain the tensioning tendon (6) in its elongated state.
